# EUROPÄISCHE PATENTSCHRIFT

(11) **EP 0 799 560 B1**
(45) Veröffentlichungstag und Bekanntmachung des Hinweises auf die Patenterteilung: **15.11.2000**
(21) Anmeldenummer: 97102933.5
(22) Anmeldetag: 22.02.1997
(51) Int. Cl.: A01C 7/08

(54) **Abluftleitung für eine pneumatisch arbeitende Verteilmaschine**
Exhaust air conduit for pneumatic distributor
Conduite pour l'air de sortie d'un distributeur pneumatique

(30) Priorität: 04.04.1996 DE 19613785
(43) Veröffentlichungstag der Anmeldung: 08.10.1997
(73) Patentinhaber: Kverneland Accord GmbH & Co. KG, 59494 Soest (DE)
(72) Erfinder: Stüttgen, Gerhard Franz Alfons, 59510 Lippetal (DE)
(74) Vertreter: Habbel, Hans-Georg, Dipl.-Ing.

(56) Entgegenhaltungen:
- EP-A- 0 252 348
- DE-U- 9 313 779
- DE-U- 9 410 912

## Beschreibung

Die Erfindung betrifft eine Abluftleitung für eine pneumatisch arbeitende Verteilmaschine gemäß dem Oberbegriff des Hauptanspruches.

Pneumatisch arbeitende Verteilmaschinen, z. B. für Saatgut, Dünger u. dgl., sind bereits seit langem bekannt, z. B. aus dem Gebrauchsmuster G 94 10 912.5. Das zu fördernde Gut wird pneumatisch einem Verteiler zugeführt, der das Fördergut auf einzelne Verteilerleitungen verteilt, die zu Ausbringeinrichtungen führen, beispielsweise Säscharen.

Sperrmittel können dazu eingesetzt werden, einzelne Verteilerleitungen zu sperren, um das Ausbringen des Fördergutes auf die jeweiligen Ausbringeinrichtungen zu unterbinden, um z. B. im Fall einer Sämaschine Fahrgassen anzulegen, in denen kein Saatgut abgelegt werden soll. Das Fördergut, das einer abgesperrten Verteilerleitung zugeführt wird, wird über einen Ableitstutzen abgeleitet. Dieser Ableitstutzen wiederum ist mit einer Rückführungsleitung verbunden, die das abgeleitete Fördergut wieder in den Förderbereich der Fördereinrichtung zurückführt, d. h. z. B. in den Vorratstank des Fördergutes oder direkt zur Fördereinrichtung. Es ist auch möglich, daß das abgeleitete Fördergut direkt in das pneumatische Fördersystem zurückgeleitet wird, wobei es nachteilig sein kann, daß durch dieses Einbringen des abgeleiteten Gutes in den Förderstrom die Aussaatmenge der noch offenen Verteilerleitungen verändert wird, so daß eine Nachjustierung des Einstellwertes des Dosiergerätes erforderlich sein kann. Bei der Rückführung des Fördergutes bei abgesperrter Verteilerleitung wird sowohl das Fördergut als auch die Förderluft der pneumatischen Verteilermaschine abgeleitet. Wenn das Fördergut wieder zurück in dem Vorratstank des Fördergutes zurückgeleitet wird, speziell wenn ein Sammler benutzt wird, der von dem Fördergut umgeben ist, kann es passieren, daß die zusätzlich abgeleitete Förderluft in dem Vorratstank zur Bildung von Luftansammlungen bzw. Luftblasen führt, die eine optimale Förderung des Fördergutes aus dem Tank heraus verhindert. Besonders störend kann es sein, wenn sich die durch die abgeleitete Förderluft gebildeten Luftblasen in der Nähe des in dem Tank befindlichen Dosiergerätes befinden und es so zu Fehldosierungen kommt.Wenn die Förderluft in das pneumatische Fördersystem zurückgeführt wird, kann es zu einer unerwünschten Veränderung der Förderströmungsverhältnisse führen, die zu einer Veränderung der Ausbringgenauigkeit führen kann.

Aus der gattungsbildenden EP-A-252 348 ist eine pneumatische Verteilmaschine bekannt, die die Rückleitung von Saatgut ermöglicht, das zunächst einer Saatleitung zugefördert wurde, die jedoch über Absperrmittel verschlossen ist, beispielsweise um eine Fahrgasse anzulegen. Diese Rückförderung des Saatgutes erfolgt über eine Rückführungsleitung, die über einen Zyklon verfügen kann, um überschüssige Luft des Luftförderstromes abzuleiten.

Diese bekannte Vorrichtung, die einen Zyklon aufweist, ist jedoch nachteilhaft, da der Zyklon zum einen teuer in der Herstellung ist und zum anderen einen hohen Platzbedarf hat, so daß insbesondere, wenn viele Rückführungsleitungen mit einer entsprechenden Vorrichtung ausgestattet werden sollen, die Verwendung eines Zyklons pro Rückführungsleitung sehr aufwendig ist.

Der Erfindung liegt die Aufgabe zugrunde, die gattungsgemäße Abluftleitung so weiterzubilden, daß eine sehr kompakte Bauweise bei geringen Herstellungskosten ermöglicht wird.

Diese der Erfindung zugrundeliegende Aufgabe wird durch die Lehre des kennzeichnenden Teiles des Hauptanspruches gelöst.

Vorteilhafte Ausgestaltungen der Erfindung sind in den Unteransprüchen erläutert.

Ein Ausführungsbeispiel der Erfindung wird nachfolgend in den Zeichnungen dargestellt, wobei mit
- Fig. 1: ein Anschlußstück für einen Verteiler mit einer darin angeordneten Abluftleitung dargestellt wird, in
- Fig. 2: ein Sammler für Rückführungsleitungen gezeigt wird und
- Fig. 3: in einer schematischen Darstellungsweise eine Gesamtansicht eines Verteilers mit Zuführungs- und Ableitungsleitungen zeigt.

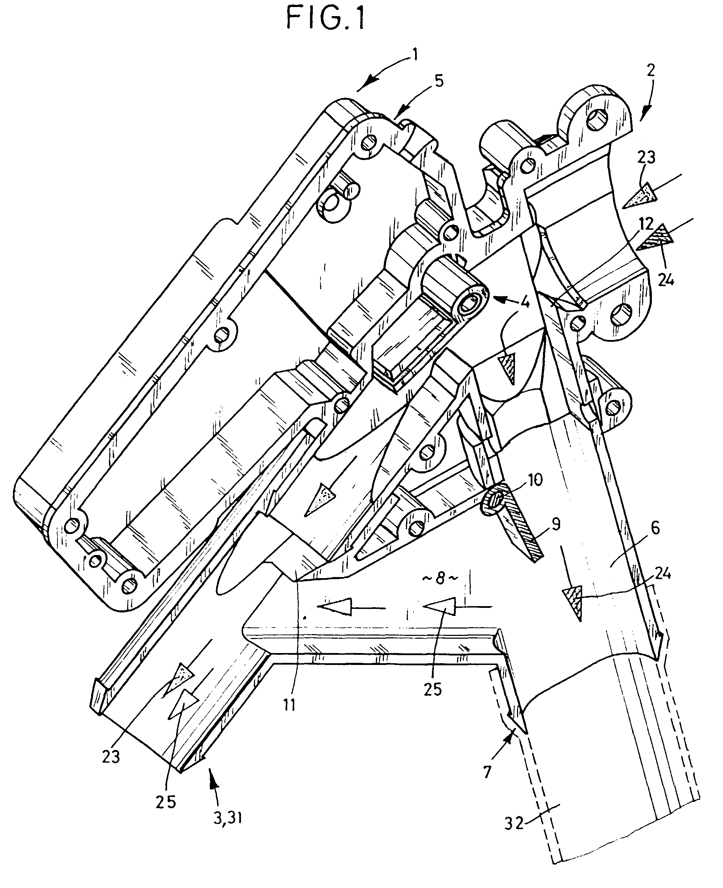

Bezugnehmend auf Fig. 1 ist ein Anschlußstück 1 für einen nicht dargestellten Verteiler gezeigt, wobei in Fig. 1 lediglich eine Seitenhälfte des Anschlußstückes dargestellt ist, und auf diese Seitenhälfte ist eine weitere Seitenhälfte montierbar, um das Anschlußstück 1 in seiner Gesamtheit auszubilden. Das Anschlußstück 1 weist einen Anschluß 2 auf, der an den Verteiler montiert werden kann und weist einen endseitigen Anschluß 3 auf, an den z. B. mittels einer Schelle eine flexible Rohrleitung 31 montiert werden kann, die zu Ausbringeinrichtungen führt, beispielsweise einem Säschar, einem Düngerstreuer od. dgl. Zwischen dem eingangsseitigen Anschluß 2 und dem endseitigen Anschluß 3 ist eine Sperrklappe 4 angeordnet, die in ihrer geöffneten Position dargestellt ist und den Durchfluß des Fördergutes vom Anschluß 2 zu Anschluß 3 nicht behindert. Diese Sperrklappe 4 kann nach unten geschwenkt werden, so daß sie sich in ihrer Sperrposition befindet. Über der Sperrklappe 4 befindet sich ein Gehäuse 5, das in seinem Innenraum Platz für einen Antrieb der Sperrklappe 4 bietet, beispielsweise einen elektromagnetisch arbeitenden Antrieb.

Zwischen Sperrklappe 4 und eingangsseitigem Anschluß 2 des Anschlußstückes 1 befindet sich ein Einmündungsbereich der Rückführleitung 6, wobei diese Rückführleitung 6 bei geschlossener Sperrklappe 4 das zugeführte Fördergut zurückführt, d. h. das Fördergut zurück in den Tank führt bzw. in das pneumatische Zuführsystem des Fördergutes zu dem Verteiler. Dadurch wird erreicht, daß selbst bei geschlossener Sperrklappe 4 das zugeführte Fördergut abgeführt wird und nicht auf die nebenliegenden Leitungen verteilt wird. Die Rückführleitung 6 ist nicht nur als z B rohrförmiges Element zu verstehen, sondern betrifft die ganze Strecke des abgeleiteten Fördergutes von dem Sperrmittel bis zur Abgabe des rückgeleiteten Fördergutes in den erneuten Förderkreislauf, d. h. z. B. bis zu einer Dosiereinrichtung bzw bis zu einer Fördereinrichtung.

Von der Rückführleitung 6, die ebenfalls ein Anschlußstück 7 aufweist, an dem z. B. ein Rückführungsschlauch mittels Schlauchklemmen angeordnet werden kann, geht eine Abluftleitung 8 ab und mündet im Bereich des endseitigen Anschlusses 3 des Anschlußstückes stromabwärts der Sperrklappe 4. Über diese Abluftleitung 8 findet eine Separierung des zurückgeleiteten Fördergutes und der Förderluft statt. Während das Fördergut, wie beispielsweise Saatgut, aufgrund der Schwerkraft und aufgrund der Massenträgheit nach unten entlang der Rückführleitung 6 fällt, kann die nun nicht mehr benötigte pneumatische Förderluft über die Abluftleitung 8 im Sinne einer Bypassleitung die Sperrklappe 4 umgehen und wird anschließend über den endseitigen Anschluß 3 und die Verteilerleitungen über die Ausbringvorrichtungen abgegeben, ohne daß sie die weitere Förderung bzw. Verteilung des Fördergutes behindern kann.

Dabei ist es nicht notwendig, daß die Abluftleitung 8 unmittelbar im Anschlußstück 1 vorgesehen ist, wie es in Fig. 1 dargestellt ist, sondern die Abluftleitung 8 kann entlang der gesamten Länge der Rückführleitung 6 an dieser anschließen und kann daher sogar auch im Bereich des Dosierrades für das Fördergut abgehen. Zur besseren Übersicht sind in Fig. 1 Pfeile eingezeichnet, die die möglichen Strömungen und Flüsse verdeutlichen. Pfeile 23 zeigen den Fördergut- und Förderluftstrom bei geöffneter Sperrklappe 4; Pfeile 24 zeigen das abgeleitete Fördergut-Luftgemisch bei geschlossener Sperrklappe 4 und die Pfeile 25 zeigen die über die Bypassleitung abgeleitete Luft bei ebenfalls geschlossener Sperrklappe 4.

Die in Fig. 1 dargestellte Möglichkeit bietet den besonderen Vorteil, daß eine sehr kompakte Bauweise erreicht wird, da sowohl das Anschlußstück 1 als auch die Abluftleitung 8 ein Bauteil bilden, wodurch die Herstellungskosten sowie die Montagekosten minimiert werden. So ist z. B. eine gesonderte Montage der Abluftleitung 8 nicht mehr notwendig.

Im Mündungsbereich der Rückführleitung 6 und der Abluftleitung 8 ist eine Schwenkklappe 9 vorgesehen, die über ein Gelenk 10 schwenkbar ausgebildet ist. Die Betätigung des Gelenkes 10 kann beispielsweise über einen nicht dargestelten Hebel bzw. über elektronische Stellmotoren od. dgl. durchgeführt werden. Über diese Schwenkklappe 9 ist eine Beeinflussung der Menge des abgeleiteten Fördergutes möglich, das über die Abluftleitung 8 in Richtung der Ausbringmittel (Säschare od. dgl.) gefördert wird. Bei der in Fig. 1 dargestellten Stellung wird sämtliches Fördergut über die Rückführleitung 6 abgeführt und nur Abluft über die Abluftleitung 8 abgeführt. Wenn die Schwenkklappe 9 weiter einwärts, d. h. in Richtung der Abluftleitung 8 eingestellt wird, wird ein gewisser Prozentsatz des abgeleiteten Fördergutes in die Abluftleitung geraten, z. B. 5 %, und wird dann über die Verteilerleitungen über die Ausbringmittel ausgebracht. Dies kann ein erwünschter Effekt sein, um z. B bei der Anlegung von Fahrgassen ab und zu ein Saatkorn zu fördern, um durch die nun vereinzelt ausgesäten Pflanzen eine Verminderung der Erosion auf den ansonsten unbewachsenen Fahrgassen zu erreichen. Durch die unterschiedlichen Positionen der Schwenkklappe 9 kann der Landwirt selbst entscheiden, ob er überhaupt keine Förderung von Fördergut auf das abgeschlossene Ausbringmittel haben möchte oder ob er eine bestimmte Menge von Fördergut auf das ansonsten geschlossene Ausbringmittel haben möchte. Um diesen Effekt zu erreichen, ist es auch möglich, die Länge der Schwenkklappe 9 variabel zu gestalten bzw. unterschiedliche Längen der Schwenkklappe 9 anzubieten, die dann von dem Benutzer entsprechend seiner Wünsche eingesetzt werden kann Die Schwenkklappe 9 kann selbstverständlich auch dort verwendet werden, wo die Abluftleitung 8 nicht zur Verteilerleitung verläuft.

Die Einmündung der Abluftleitung 8 an dem endseitigen Anschluß 3 bzw an die Verteilerleitung ist derart ausgebildet, daß der Querschnitt des endseitigen Anschlusses 3 vor der Einmündung der Abluftleitung 8 kleiner ausgebildet ist als der Querschnitt des endseitigen Anschlusses 3 stromabwärts der Einmündung der Abluftleitung 8. Dadurch wird erreicht, daß bei offener Sperrklappe 4 das Fördergut nicht ungewollt in die Abluftleitung 8 gelangt, sondern unbehindert durch den endseitigen Anschluß 3 in Richtung Ausgabevorrichtung entweichen können. Aus Fig. 1 wird deutlich, daß im Mündungsbereich der Abluftleitung 8 stromaufwärts für das Fördergut eine Art Sprungschanze 11 vorgesehen ist. Eine ähnliche Querschnittsverengung und Ausbildung einer Sprungschanze ist bei 12 am verteilerseitigen Anschluß 2 zu sehen.

In weiteren, nicht dargestellten Ausführungsmöglichkeiten kann die Abluftleitung 8 zum Beispiel im oberen Bereich des Förderguttankes münden, so daß dort die nicht benötigte Förderluft entweichen kann. Darüber hinaus ist es möglich, daß die Abluftleitung 8 durch die Tankwandung nach außen geführt wird, wo die Förderluft entweichen kann, ohne die weitere Förderung von Fördergut zu behindern.

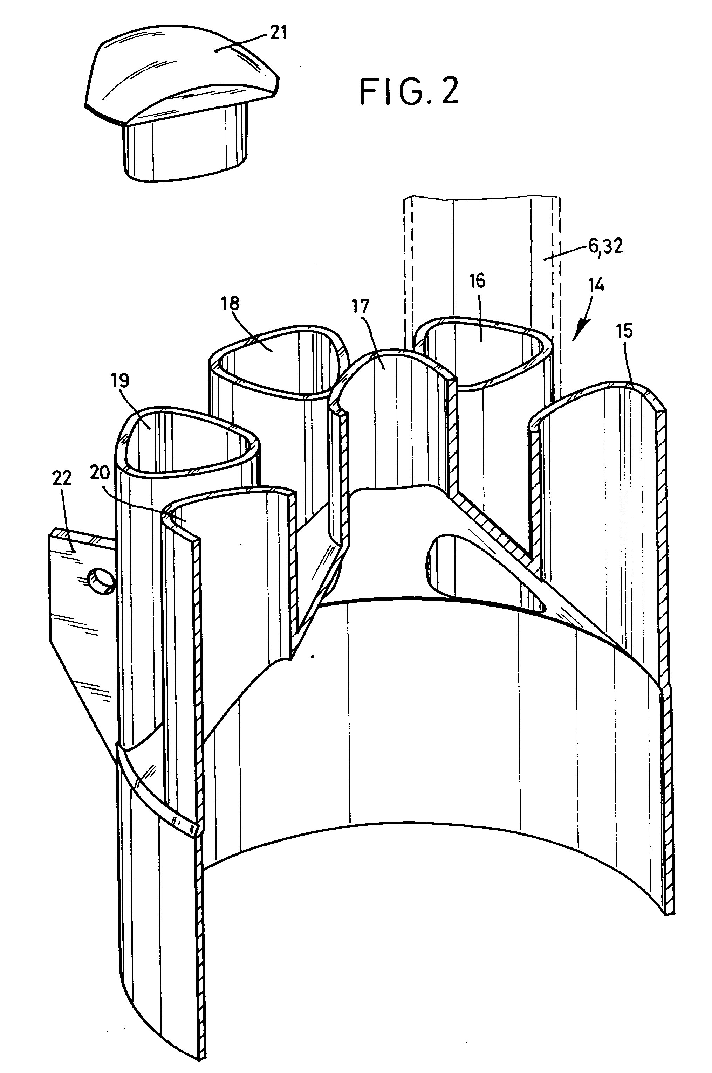

Die Rückführungsleitungen 6 können zu einem in Fig. 2 dargestellten Sammler 14 geführt werden, der mehrere Anschlüsse 15 bis 20 aufweist, wobei auf jedem Anschluß eine Rückführungsleitung 6 angeordnet werden kann. Nicht belegte Anschlüsse des Sammlers können durch einen Stopfen 21 verschlossen werden. Der Stopfen 21 verhindert, daß Fördergut durch nicht verschlossene Anschlüsse in das Innere des Sammlers 14 hineingeraten kann, da der Sammler 14 innerhalb des Förderguttankes unterhalb des Fördergutspiegels angeordnet sein kann Unterhalb des Sammlers 14 ist in vorteilhafter Ausgestaltung eine Dosiereinrichtung 29 für das Fördergut angeordnet, z. B. ein Zellenrad 35 für die Dosierung von Saatgut. Der Sammler 14 hat den Vorteil, daß die Abgabe des abgeleiteten Fördergutes kontrolliert erfolgt, d. h. ein Verstopfen der Leitungen 6, 32 wird vermieden, da unterhalb des Sammlers 14 stets Fördergut von der Dosiereinrichtung 29 weggefördert wird und so ein Rückstau von abgeleitetem Fördergut in den Leitungen 6, 32 nicht erfolgt. Trotzdem ermöglicht der Sammler 14 die Anordnung der Abgabeendungen der Leitungen 6, 32 unterhalb des Fördergutspiegels 34, da er an den Abgabeöffnungen einen Hohlraum im Förderguttank schafft, so daß stets die Abgabeöffnungen der Leitungen 6, 32 frei sind und so ein Rückstau im Fördergut vermieden wird. Bislang ergab sich bei den Abgabeendungen der Rückführungsleitungen 6, 32 das Problem, daß sie entweder über dem Saatgutspiegel angeordnet werden mußten, um ein Verstopfen zu vermeiden, wobei eine Förderung des abgeleiteten Fördergutes auf dieser Höhe kostspielig und energieaufwendig ist, oder daß bei einer Anordnung der Abgabeendung innerhalb des Förderguttankes 28 es passieren konnte, daß die abgeleiteten Saatkörner od. dgl. sich aufgrund einer blockierten Ausgabeöffnung der Rückführungsleitung in derselben rückstauten.

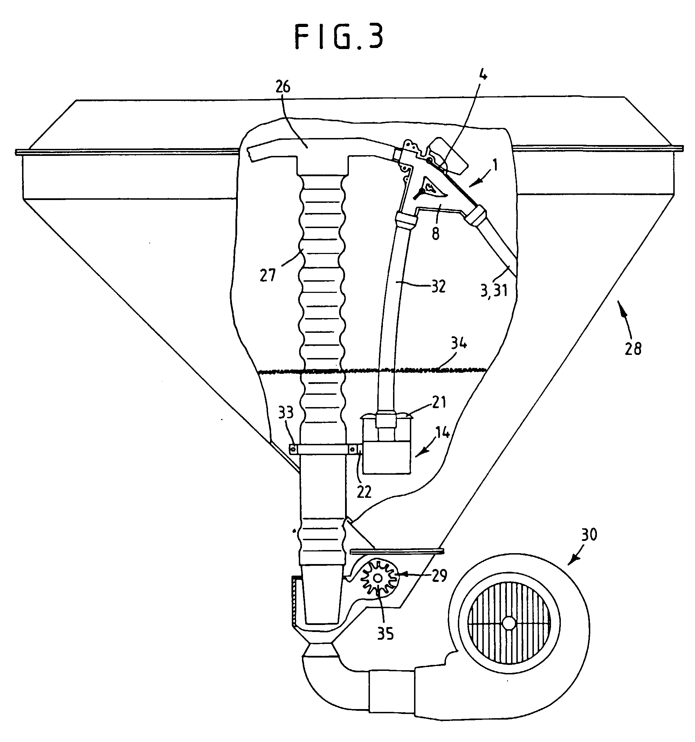

Zur besseren Übersicht ist in Fig. 3 eine schematische Gesamtdarstellung eines Verteilerkopfes 26 gezeigt, der mitsamt seiner Fördergutzuführungsleitung 27 und seinen abgehenden Leitungen in einem Förderguttank 28 angeordnet ist.

Über eine Dosiereinrichtung 29 wird das Fördergut aus dem Förderguttank 28 dosiert und über ein Gebläse 30 der Fördergutzuführungsleitung 27 zugeführt, die an dem Verteilerkopf 26 mündet An dem Verteilerkopf 26 sind die bereits in Fig. 1 dargestellten Anschlußstücke 1 angeordnet, die über die bereits beschriebene Sperrklappe 4 verfügen. An den Anschlußstücken 1 sind Leitungen 31 angeordnet, die zu den Ausbringorganen für das Fördergut führen und darüber hinaus sind an den Anschlußstucken 1 Rückführungsleitungen 32 angeordnet, die das bei geschlossener Sperrklappe 4 umgelenkte Fördergut dem Dosiergerät 29 wieder zuführen. Dabei sind die Rückführungsleitungen 32 mit dem in Fig. 2 dargestellten Sammler 14 verbunden. wobei die Rückführungsleitungen 32 auf einem der Anschlüsse 15 bis 20 des Sammlers 14 festgelegt sind. Die nicht durch eine Rückführungsleitung 32 belegten Anschlüsse sind mittels des Stopfens 21 verschlossen.

Bei der Rückführung von Fördergut von abgesperrten Verteilerleitungen gerät das rückgeführte Fördergut über die Rückführungsleitungen 6, 32 und über den Sammler 14 direkt auf die Dosiereinrichtung 29 und wird anschließend sofort wieder dem Verteiler zugeführt. Der Sammler 14 ist als ein Teil des Rückführungskanales zu sehen, da es das abgeleitete Fördergut weiterleitet, und dementsprechend kann der Sammler 14 ebenfalls mit einer Abluftleitung 8 versehen sein. Eine Behinderung der Dosiereinrichtung 29 durch ein zuviel an rückgeführter Förderluft findet aufgrund der verwendeten Abluftleitungen 8 nicht statt.

Zwischen den Wandungen des Sammlers 14 und den Tankwandungen befindet sich ein Durchflußspalt für Fördergut, durch den das Fördergut von dem Tank 28 auf die Dosiereinrichtung 29 gerät. Je nach Tankgeometrie und Flußcharakteristik des Fördergutes ist das Nachfließen des Fördergutes zwischen Sammleraußenwandung und Tankinnenwandung mehr oder weniger hoch. Daher ist es vorteilhaft, den Sammler 14 verstellbar anzuordnen, d. h. zum Beispiel vertikal verstellbar, so daß bei einer höheren Einstellung des Sammlers 14 der Spalt zwischen Sammler 14 und Tankinnenwandung vergrößert wird und der Durchfluß des Fördergutes erhöht wird.

Die Höhenverstellung des Sammlers 14 kann z. B. dadurch erfolgen, daß ein Anschluß 22 des Sammlers 14 an einer Befestigungseinrichtung angeschlossen ist, die wiederum in ihrer Höhe veränderlich ist. Bei der Befestigungseinrichtung kann es sich z. B. um eine Rohrschelle 33 handeln, die an dem Steigrohr bzw. der Fördergut-Zuführungsleitung 27 für das Fördergut in Richtung des Verteilers befestigt ist.

## Patentansprüche

1. Abluftleitung für eine pneumatisch arbeitende Verteilmaschine für Saatgut, Dünger u. dgl., mit einem Verteiler (26), der einerseits mit einem Vorratsbehälter (28) und einer Fördereinrichtung verbunden ist und andererseits Verteilerleitungen (3, 31) aufweist, die an den Verteiler (26) anschließen und die zu Ausbringeinrichtungen für das zu verteilende Gut führen, sowie Absperrmitteln (4), um eine oder mehrere Verteilerleitungen abzusperren, wobei im Bereich der Absperrmittel Ableitstutzen angeordnet sind, die das den abgesperrten Verteilerleitungen zugeführte Fördergut über Rückführungsleitungen (32) dem zu verteilenden Fördergut wieder zuführen, wobei die Aufnahmeöffnung der Abluftleitung in die Rückführungsleitung mündend ausgebildet ist und die Abgabeöffnung der Abluftleitung in einem Abgabebereich abseits der Rückführungsleitung (32) angeordnet ist, dadurch gekennzeichnet, daß die Abgabeöffnung der Abluftleitung (8) in der zu der Ausbringvorrichtung führenden Verteilerleitung (3, 31) mündet.

2. Abluftleitung gemäß Anspruch 1, dadurch gekennzeichnet, daß die Abluftleitung (8) in einem separaten Gehäuse untergebracht ist, das an das Absperrmittel bzw. die Rückführungsleitung (6) einfügbar ist.

3. Abluftleitung gemäß Anspruch 1, gekennzeichnet durch ein Gehäuse, das sowohl das Absperrmittel als auch die Abluft-leitung (8) aufnimmt.

4. Abluftleitung gemäß einem der vorhergehenden Ansprüche, dadurch gekennzeichnet, daß der endseitige Anschluß (3) des Anschlußstückes (1) unmittelbar stromaufwärts vor der Einmündung der Abluftleitung (8) einen kleineren Querschnitt aufweist als der hinter der Einmündung vorgesehene Querschnitt.

5. Abluftleitung gemäß einem der vorhergehenden Ansprüche, dadurch gekennzeichnet, daß die Abluftleitung (8) im oberen Bereich des Förderguttankes endet.

6. Abluftleitung gemäß einem der vorhergehenden Ansprüche, gekennzeichnet durch die Abluftleitung (8), die frei außerhalb des Förderguttankes mündet.

7. Abluftleitung gemäß Anspruch 6, dadurch gekennzeichnet, daß die Abluftleitung (8) durch die Wandung des Förderguttankes nach außen geführt ist.

8. Abluftleitung gemäß einem der vorhergehenden Ansprüche, dadurch gekennzeichnet, daß die Rückführleitung (6) in einem mit mehreren Anschlüssen (15 - 20) versehenen Sammler (14) mündet, der über dem Einzugsbereich einer Dosiereinrichtung angeordnet ist.

9. Abluftleitung gemäß Anspruch 8, dadurch gekennzeichnet, daß der Sammler (14) in seiner Lage zum Dosiergerät verstellbar angeordnet ist.

10. Abluftleitung gemäß einem der Ansprüche 8 oder 9, gekennzeichnet durch den Sammler (14), dessen nicht belegte Anschlüsse (15 - 20) über Stopfen (21) verschließbar ausgebildet sind.

11. Abluftleitung gemäß einem der vorhergehenden Ansprüche, gekennzeichnet durch eine im Bereich der Aufnahmeöffnung der Abluftleitung (8) angeordnete Schwenkklappe (9), deren Winkelstellung veränderbar ausgebildet ist.

12. Abluftleitung gemäß Anspruch 11, dadurch gekennzeichnet, daß die Schwenkklappe (9; in ihrer Länge verstellbar ist.

## Claims

1. Exhaust air conduit for a pneumatic distributor for seeds, fertilizer and the like, comprising a distributor (26), which is on the one side connected to a hopper (28) and a conveying device and comprises on the other side distributor conduits (3, 31) which connect to the distributor (26) and lead to dispensing devices for materials to be distributed, as well as shut-off means (4) for shutting off one or more distributor conduits, and in the area of the shut-off means are arranged diverting sockets which again return conveying materials, which had been directed to the shut-off distributor conduits, via return conduits (32) to the conveying materials which are to be distributed, and the receiving opening of the exhaust air conduit is designed to terminate in the return conduit, and the dispensing opening of the exhaust air conduit is arranged in a dispensing area offside of the return conduit (32), **characterised in that** the dispensing opening of the exhaust air conduit (8) terminates in the distributor conduit (3, 31) which connects to the dispensing device.

2. Exhaust air conduit according to Claim 1, **characterised in that** the exhaust air conduit (8) is accommodated in a separate housing which is insertible into the shut-off means or the return conduit (6).

3. Exhaust air conduit according to Claim 1, **characterised by** a housing which accommodates both the shut-off means and the exhaust air conduit (8).

4. Exhaust air conduit according to one of the above claims, **characterised in that** the endsided connection (3) of the connecting piece (1) has directly upstream in front of the mouth of the exhaust air conduit (8) a smaller diameter than the cross-section provided behind the mouth.

5. Exhaust air conduit according to one of the above claims, **characterised in that** the exhaust air conduit (8) ends in the upper region of the conveying material hopper.

6. Exhaust air conduit according to one of the above claims, **characterised by** the exhaust air conduit (8) which terminates freely outside the conveying material hopper.

7. Exhaust air conduit according to Claim 6, **characterised in that** the exhaust air conduit (8) is ducted through the wall of the conveying material hopper to the outside.

8. Exhaust air conduit according to one of the above claims, **characterised in that** the return conduit (6) terminates in a collector (14) which is provided with a plurality of sockets (15 - 20) and arranged above the intake area of an apportioning device.

9. Exhaust air conduit according to Claim 8, **characterised in that** the collector (14) is arranged to be adjustable in its position to the apportioning device.

10. Exhaust air conduit according to one of Claims 8 or 9, **characterised by** the collector (14) the not covered connections (15 - 20) of which are designed in such a manner that they can be shut by means of bungs (21).

11. Exhaust air conduit according to one of the above claims, **characterised by** a pivotal flap (9) which is arranged in the area of the intake opening of the exhaust air conduit (8) and the angular position of which is designed to be adjustable.

12. Exhaust air conduit according to Claim 11, **characterised in that** the length of the pivotal flap (9) is adjustable.

## Revendications

1. Conduite d'évacuation d'air pour un distributeur mécanique de semences, engrais et matières analogues, actionné par voie pneumatique, comprenant un distributeur (26) qui, d'une part, est relié à un bac de stockage (28) et à un dispositif de transport et qui, d'autre part, comporte des conduites de distribution (3, 31), qui sont raccordées avec le distributeur (26) et qui conduisent vers des dispositifs de sortie des matières à distribuer, ainsi que des organes d'arrêt (4) destinés à fermer une ou plusieurs conduites de distribution, des tubulures de dérivation étant disposées dans la zone des organes d'arrêt, par lesquelles tubulures les matières à acheminer, guidées vers les conduites de distribution fermées, sont acheminées à nouveau au moyen de conduites de retour (32) vers les matières à répartir, l'orifice d'admission de la conduite d'évacuation d'air débouchant dans la conduite de retour et l'orifice de sortie de la conduite d'évacuation d'air étant disposé dans une zone de sortie à l'écart de la conduite de retour (32), caractérisée en ce que l'orifice de sortie de la conduite d'évacuation d'air (8) débouche dans la conduite de distribution (3, 31) conduisant vers le dispositif de sortie.

2. Conduite d'évacuation d'air selon la revendication 1, caractérisée en ce que la conduite d'évacuation d'air (8) est posée dans un boîtier séparé, qui peut être encastré avec l'organe d'arrêt ou avec la conduite de retour (6).

3. Conduite d'évacuation d'air selon la revendication 1, caractérisée par un boîtier, dans lequel est logé non seulement l'organe d'arrêt mais aussi la conduite d'évacuation d'air (8).

4. Conduite d'évacuation d'air selon l'une quelconque des revendications précédentes, caractérisée en ce que le raccord (3) du côté de l'extrémité de la pièce de raccord (1) est conçu directement en amont de l'entrée de la conduite d'évacuation d'air (8) avec une section plus petite que la section prévue en aval de l'entrée.

5. Conduite d'évacuation d'air selon l'une quelconque des revendications précédentes, caractérisée en ce que la conduite d'évacuation d'air (8) se termine dans la partie supérieure de la cuve contenant les matières à acheminer.

6. Conduite d'évacuation d'air selon l'une quelconque des revendications précédentes, caractérisée par la conduite d'évacuation d'air (8) qui débouche à l'air libre en dehors de la cuve contenant les matières à acheminer.

7. Conduite d'évacuation d'air selon la revendication 6, caractérisée en ce que la conduite d'évacuation d'air (8) est guidée vers l'extérieur à travers la paroi de la cuve contenant les matières à acheminer.

8. Conduite d'évacuation d'air selon l'une quelconque des revendications précédentes, caractérisée en ce que la conduite de retour (6) débouche dans un collecteur (14) muni de plusieurs raccords (15 à 20), lequel collecteur est disposé au-dessus de la zone d'entrée d'un dispositif de dosage.

9. Conduite d'évacuation d'air selon la revendication 8, caractérisée en ce qu'il est possible de régler la position du collecteur (14) par rapport au dispositif de dosage.

10. Conduite d'évacuation d'air selon la revendication 8 ou 9, caractérisée par le collecteur (14), dont les raccords (15 à 20) non utilisés peuvent être fermés par des bouchons (21).

11. Conduite d'évacuation d'air selon l'une quelconque des revendications précédentes, caractérisée par un clapet pivotant (9) qui est disposé dans la zone de l'orifice d'admission de la conduite d'évacuation d'air (8) et dont la position angulaire peut être modifiée.

12. Conduite d'évacuation d'air selon la revendication 11, caractérisée en ce qu'il est possible de faire varier la longueur du clapet pivotant (9).
